# EUROPEAN PATENT APPLICATION

(11) **EP 2 112 780 A1**
(43) Date of publication of application: **28.10.2009**
(21) Application number: 08800733.1
(22) Date of filing: 01.09.2008
(51) Int. Cl.: H04L 12/14, H04M 15/00

(54) **A ROAMING ON-LINE CHARGING METHOD,EQUIPMENT AND CONTROL SYSTEM**

(30) Priority: 29.02.2008 CN 200810026533
(71) Applicant: Huawei Technologies Co., Ltd., Longgang District Shenzhen Guangdong 518129 (CN)
(72) Inventor: The designation of the inventor has not yet been filed
(74) Representative: Barth, Stephan Manuel
(86) International application number: PCT/CN2008/072221
(87) International publication number: WO 2009/105949

(57) **Abstract**

A method, device and control system for online charging on roaming are provided. The method includes: receiving a roaming online charging request from a visited gateway; determining a subsequent roaming charging policy according to the roaming online charging request combined with a charging control policy; and processing charging according to the determined roaming charging policy. The present invention extends the online charging scheme for roaming subscribers.

## Description

### Field of the Invention

The present invention relates to the field of communications, and in particular, to a method, device and control system for online charging on roaming.

### Background of the Invention

As the 3rd Generation (3G) wireless broadband network provides richer mobile data value-added services and the Internet surfing activities of data service subscribers are diversified, traditional time based voice service charging is not able to meet the needs of a mobile data network. An operator may not only be able to analyze the online duration, data traffic and content information of a data service subscriber but also be able to monitor subscriber account information in real time so as to enable precise real-time charging without delay, and thus to avoid ill-willed arrears for consumption of data services and guarantee benefits of the operator. Another challenge to online charging is charging control when a roaming subscriber consumes services in a visited network.

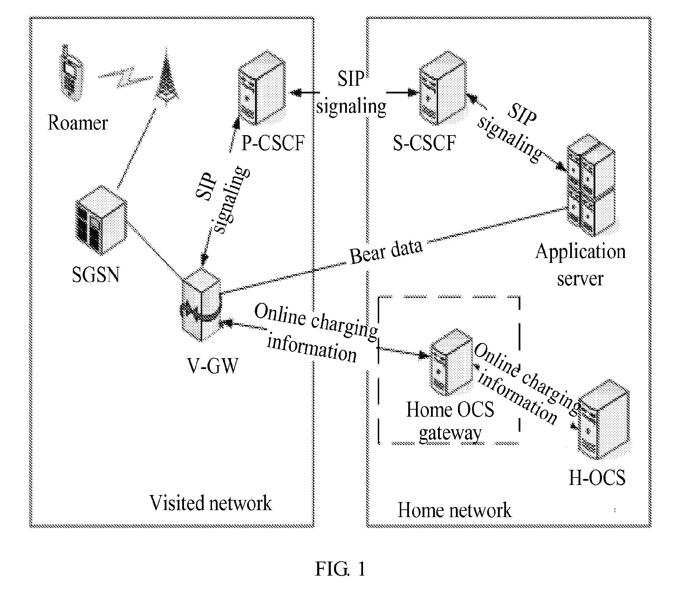

FIG. 1 illustrates a system for online charging on roaming in a conventional art. As shown in FIG. 1, a Visited Gateway (V-GW) is directly connected to a Home Online Charging System (H-OCS), or forwards online charging messages via an online charging gateway in the home network. When a subscriber roams in the visited network and consumes services provided by the home network, the V-GW knows the address of the H-OCS (or home online charging gateway) and sends charging requests directly to the H-OCS so as to complete charging information collection and control. To implement online charging on roaming via this system, all V-GWs could be configured with the H-OCS address. The configurations are complicated. In addition, the online charging system is a core network entity of an operator. Its direct exposure to other operators will induce big security trouble. The foregoing two disadvantages may be resolved to a certain extent through an online charging gateway, but it is still complex to configure charging system addresses of other operators in a large number of network elements in the visited network. When a roaming subscriber consumes services provided by the visited network while the account information of the roaming subscriber stays in the home charging system, because the H-OCS does not know the tariff of the visited network, online charging on roaming cannot be realized.

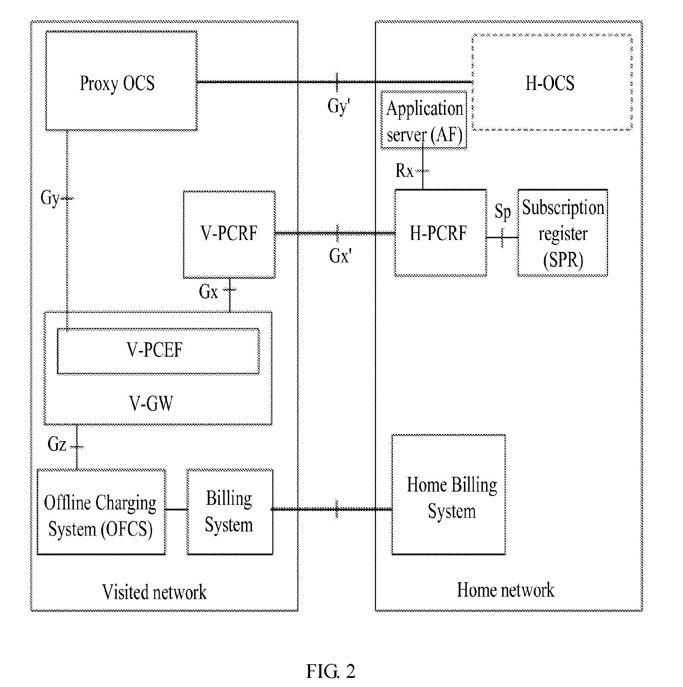

FIG. 2 is another system for online charging on roaming in the conventional art. The entities of the system are described as follows:

Visited Gateway (V-GW) is a service gateway in the visited network.

Visited Policy and Charging Enforcement Function (V-PCEF) enforces policies and charging in the visited network according to rules delivered by the V-PCRF.

Visited Policy and Charging Rules Function (V-PCRF) defines policies and charging control rules according to service attributes in the visited network and subscription information and delivers the rules to the V-PCEF; when a subscriber roams in the visited network, the V-PCRF may also obtain home policies and charging rules from the H-PCRF and define policies and charging rules suitable for the visited network.

Home Policy and Charging Rules Function (H-PCRF) defines policies and charging control rules according to service attributes in the visited network and subscription information and delivers the rules to the home PCEF for enforcement; when a subscriber is roaming, the H-PCRF may also deliver policies and charging rules to the V-PCRF.

Proxy Online Charging System (Proxy-OCS) works as an online charging message router in the visited network. It is connected to the V-PCEF and the H-OCS to implement online charging for roaming services. The Proxy-OCS in the system provides simple routing functions for online charging requests and responses between the V-PCEF and the H-OCS. In addition, to help hide the real address of the H-OCS, the Proxy-OCS obtains the real address of the H-OCS according to the H-OCS ID reported by the V-PCEF. Specifically, the virtual ID of the H-OCS is delivered to the V-GW via policy interaction between the H-PCRF and the V-PCRF. The V-GW sends an online charging message to the Proxy-OCS. The Proxy-OCS resolves the H-OCS ID according to a policy and finds the real H-OCS address, and forwards the online charging message to the home network. Thus with the Proxy-OCS, the H-OCS may implement online charging for roaming services via the V-GW. The real address of the H-OCS is not exposed to many gateway entities in the visited network, which enhances the security of the H-OCS. However, the Proxy-OCS in the system architecture provides simple routing for online charging requests and responses between the V-PCEF and the H-OCS so that the system supports online charging on roaming where the home network carries out rating and deduction activities.

### Summary of the Invention

Embodiments of the invention intend to provide a method and device for online charging on roaming so as to extend the online charging scheme for roaming subscribers.

The objective may be achieved through the following technical solution:
A method for online charging on roaming includes:
   receiving a roaming online charging request from a visited gateway;
   determining a subsequent roaming charging policy according to the roaming online charging request combined with a charging control policy; and
   processing charging according to the determined roaming charging policy.

Accordingly, an online charging system device includes:
a receiving unit, adapted to receive a roaming online charging request sent by a visited gateway;
a determining unit, adapted to determine a roaming charging policy according to the roaming online charging request and a stored charging control policy; and
an online charging unit, adapted to process online charging according to the determined roaming charging policy.

Accordingly, an online charging control system includes an online charging system device and a proxy online charging system device.

The online charging system device includes:
a receiving unit, adapted to receive a roaming online charging request sent by a visited gateway;
a determining unit, adapted to determine a subsequent roaming charging policy according to the roaming online charging request received by the receiving unit combined with a stored charging control policy; and
an online charging unit, adapted to process online charging according to a decision made by the determining unit.

The proxy online charging system device includes:
a routing and forwarding unit, adapted to send the corresponding roaming online charging request to a home online charging system for charging processing according to the decision made by the determining unit.

Upon reception of a roaming online charging request from the visited gateway, the online charging system device in the embodiments of the invention determines the subsequent roaming charging policy according to the roaming online charging request combined with a charging control policy. Subsequent online charging may be processed locally and/or in the home online charging system according to the determined roaming online charging policy. This extends the online charging scheme for roaming subscribers.

### Brief Description of the Drawings

FIG. 1 is a schematic drawing illustrating a system structure for online charging on roaming in a conventional art;

FIG. 2 is a schematic drawing illustrating another system structure for online charging on roaming in the conventional art;

FIG. 3 is a schematic drawing illustrating a system structure for online charging on roaming according to an embodiment of the invention;

FIG. 4a is a schematic drawing illustrating a structure where a V-OCS and a Proxy-OCS are integrated according to an embodiment of the invention;

FIG. 4b is a schematic drawing illustrating a system structure for online charging on roaming according to an embodiment of the invention;

FIG. 4c is a schematic drawing illustrating a structure of an online charging control system according to an embodiment of the invention;

FIG. 5 is a schematic flow chart illustrating a method for online charging on roaming according to a first embodiment of the invention;

FIG. 6 is a schematic flow chart illustrating a method for online charging on roaming according to a second embodiment of the invention;

FIG. 7 is a schematic flow chart illustrating a method for online charging on roaming according to a third embodiment of the invention;

FIG. 8 is a schematic flow chart illustrating a method for online charging on roaming according to a fourth embodiment of the invention;

FIG. 9 is a schematic flow chart illustrating a method for online charging on roaming according to a fifth embodiment of the invention; and

FIG. 10 is a schematic flow chart illustrating a method for online charging on roaming according to a sixth embodiment of the invention.

### Detailed Description of the Invention

For better understanding of the objective, technical solution and benefits of the present invention, the following describes embodiments of the present invention in detail with reference to the accompanying drawings.

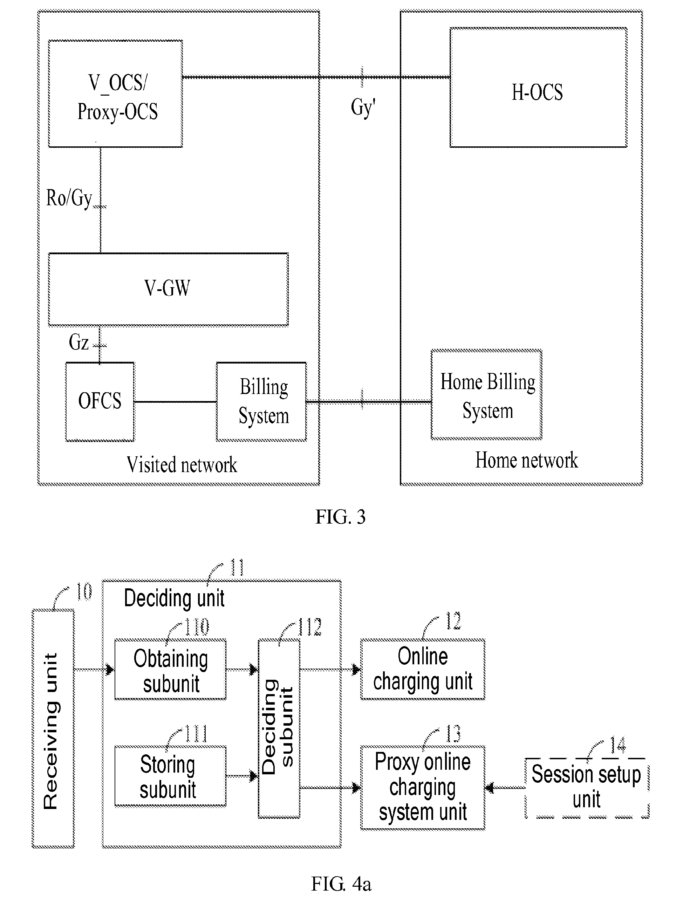

FIG. 3 is a schematic drawing illustrating the structure of a system for online charging on roaming according to an embodiment of the invention. In the structure shown in FIG. 3, a Proxy-OCS is integrated with a Visited Online Charging System (V-OCS) in a visited network, or an existing V-OCS is extended to implement functions of a Proxy-OCS. The Ro interface between the V-GW and the V-OCS and the Gy interface between the V-GW and the Proxy-OCS are integrated to one interface. The integrated Proxy-OCS and V-OCS communicate with the H-OCS via a Gy' interface. In practice, the Gy interface may be consistent with the previous Ro interface between the V-GW and the V-OCS to assure consistency of interaction between the V-GW and the V-OCS; the Gy' interface may adopt Ro interface messages or be an Rc interface that is defined now by the 3rd Generation Partnership Project (3GPP). For example, when a roaming subscriber consumes services provided by the visited network and rating is processed by the visited network, it is unnecessary to transfer service information and tariff information in the visited network to the H-OCS. In this case, the Gy' interface transfers amount information and the Rc interface may be adopted. For example:

```
            <CCR> ::= < Diameter Header: 272, REQ, PXY >
                      < Session-Id >
                        { Origin-Host }
                        { Origin-Realm }
                        { Destination-Realm }
                        { Auth-Application-Id }
                        { Service-Context-Id }
                        { CC-Request-Type }
                        { CC-Request-Number }
                        [ Destination-Host ]
                        [ User-Name ]
                        [ Origin-State-Id ]
                        [ Event-Timestamp ]
                       * [ Subscription-Id ]
                        [ Termination-Cause ]
                        [ Requested-Action ]
                        [ Multiple-Services-Indicator ]
                       *[ Multiple-Services-Credit-Control ]
                                Requested-Service-Unit
                                CC-Money
                                    Unit-Value
                                CC-Service-Specific-Units
                        [ User-Equipment-Info ]
                      * [ Proxy-Info ]
                      * [ Route-Record ]
                       [ Service-Information ]
                        *[ AVP ] / *extended AVP*/
```

FIG. 4a is a schematic drawing illustrating a structure of the integrated V-OCS/Proxy-OCS, which may be referred to as an online charging system device. As shown in FIG. 4a, the integrated V-OCS/Proxy-OCS online charging system device in this embodiment of the invention includes a receiving unit 10, a determining unit 11, an online charging unit 12 and a proxy online charging system unit 13.

The receiving unit 10 is adapted to receive a roaming online charging request sent by a V-GW.

The determining unit 11 is adapted to determine a subsequent roaming charging policy according to the roaming online charging request received by the receiving unit 10 combined with a stored charging control policy.

The online charging unit 12 is adapted to process online charging according to the decision result made by the determining unit 11. Specifically, the online charging unit 12 is adapted to process rating and charging in the visited network, or process rating and credit control in the visited network according to the decision result made by the determining unit 11.

The proxy online charging system unit 13 is adapted to send the corresponding roaming online charging request to an H-OCS for charging processing according to the decision result made by the determining unit 11. Specifically, the proxy online charging system unit 13 may send the rating and/or credit control request to the H-OCS for charging processing. During the charging process, the credit control includes charge reservation and/or deduction information.

Further, the determining unit 11 includes an obtaining unit 110, a storing unit 111, and a judging unit 112, wherein: the obtaining unit 110 is adapted to obtain the subscriber information and/or service information carried in the roaming online charging request received by the receiving unit 10; the storing unit 111 is adapted to store charging control policies; and the determining unit 112 is adapted to determine a subsequent roaming charging policy according to a charging control policy stored by the storing unit 111 and the information obtained by the obtaining unit 110. Specifically, the determining unit 112 searches out a charging control policy corresponding to the subscriber and the service according to the subscriber information and/or service information, and determines the subsequent roaming charging policy according to the charging control policy.

In practice, the subscriber information includes subscriber account registration information and subscriber ID information etc. The service information includes service home network ID information and service type information. The charging control policies stored by the storing subunit 111 include at least one of the following policies:

If a roaming subscriber requests a service in the visited network, rating and credit control should be processed by the H-OCS;

If a roaming subscriber requests a service in the visited network, rating should be processed by the V-OCS and credit control should be processed by the H-OCS;

If a roaming subscriber requests a service in the visited network, rating and credit control should be processed by the V-OCS.

If charging control policies include "if a roaming subscriber requests a service in the visited network, rating and credit control should be processed by the H-OCS" and/or "if a roaming subscriber requests a service in the visited network, rating should be processed by the V-OCS and credit control should be processed by the H-OCS", the charging control policies may also include a charging control policy of "a virtual H-OCS address is replaced with a real H-OCS address". In this case, the proxy online charging system unit 13 sends the roaming online charging request to the H-OCS for charging processing according to the real H-OCS address. If the charging control policies include "if a roaming subscriber requests a service in the visited network, rating and credit control should be processed by the H-OCS" and the H-OCS does not know tariff information of the service in the visited network, the charging control policies may also include a charging control policy information of "tariff information of the service in the visited network should be sent to the H-OCS".

In practice, in addition to the units mentioned above, the integrated V-OCS/Proxy-OCS device may further include a session establishment unit 14, adapted to set up a new session with the H-OCS. In this case, the service charging procedure in the visited network includes two stages. At a first stage, the V-GW establishes a charging session with the V-OCS/Proxy-OCS, and sends a service charging request to the V-OCS/Proxy-OCS via the charging session. At the second stage, the V-OCS/Proxy-OCS creates a new charging session where the V-OCS/Proxy-OCS plays a role of a new charging session initiator to initiate a new charging request to the H-OCS.

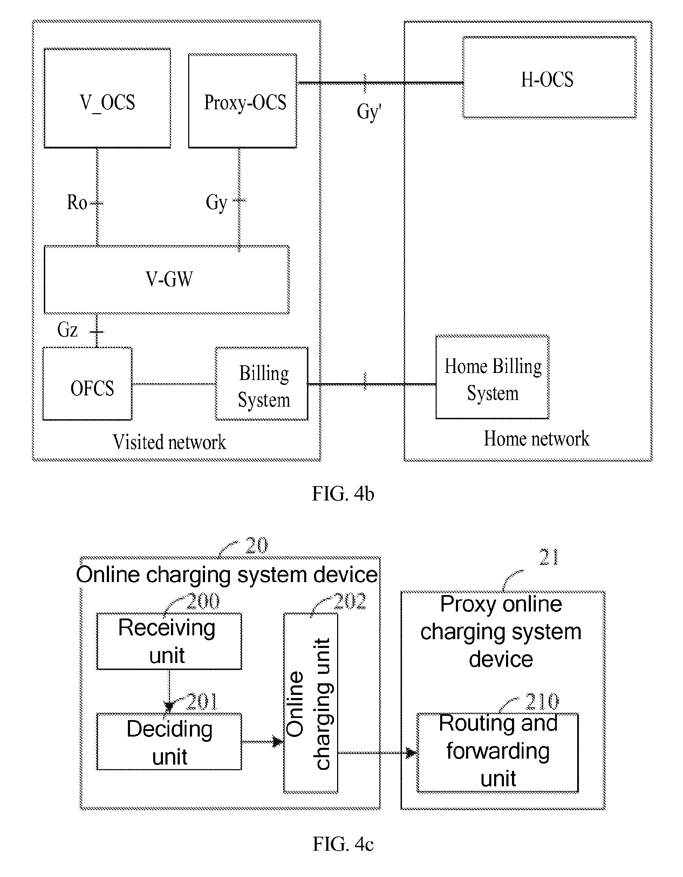

Another system architecture for online charging on roaming is disclosed in an embodiment of the invention. As shown in FIG. 4b, the system architecture is different from the foregoing system architecture in that the Proxy-OCS is separated from the V-OCS. Under this architecture, the V-GW and the V-OCS communicate via an Ro interface; the V-GW and the Proxy-OCS communicate via a Gy interface; and the Proxy-OCS and the V-OCS communicate via a private interface. The Proxy-OCS communicates with the H-OCS via a Gy' interface. In particular, the separate Proxy-OCS and V-OCS make up an online charging control system as shown in FIG. 4c. The online charging control system includes a visited online charging system device (V-OCS) 20 and a proxy online charging system device (Proxy-OCS) 21. The visited online charging system device 20 includes: a receiving unit 200, adapted to receive a roaming charging request from the V-GW; a determining unit 201, adapted to determine a subsequent roaming charging policy according to the roaming charging request received by the receiving unit 200 combined with a stored charging control policy; and an online charging unit 202, adapted to process online charging according to the decision made by the determining unit 201. The proxy online charging system device (Proxy-OCS) 21 includes a routing and forwarding unit 210, adapted to send the roaming online charging request to the H-OCS for charging processing according to the decision made by the determining unit 201. Accordingly, in this embodiment of the invention, the V-OCS or Proxy-OCS may further include a session setup unit. If the V-OCS includes a session setup unit, the Proxy-OCS routes and forwards charging information under the new session. If the Proxy-OCS includes a session setup unit, the V-OCS forwards the charging request to the Proxy-OCS and the session setup unit of the Proxy-OCS sets up a session to the H-OCS, and the routing and forwarding unit sends the charging request to the H-OCS via the session created by the session setup unit.

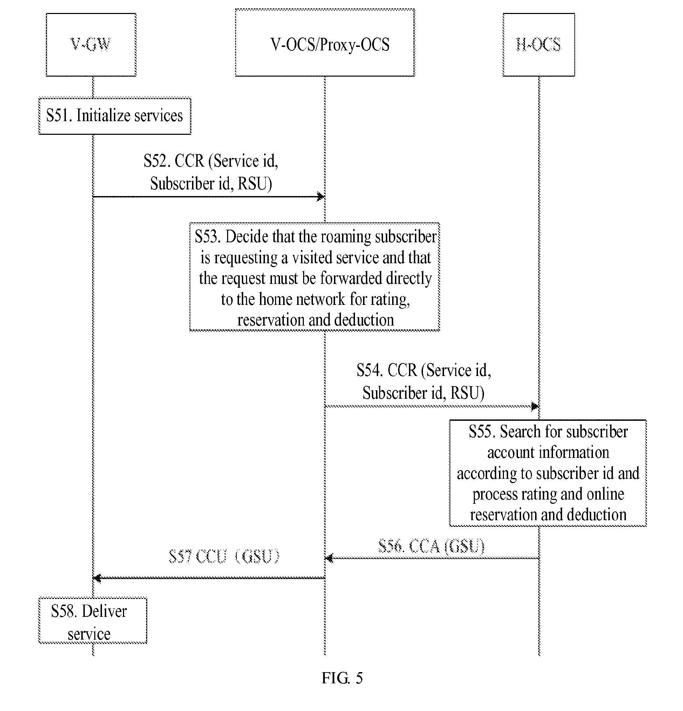

FIG. 5 is a schematic flow chart illustrating a method for online charging on roaming according to a first embodiment of the invention. The procedure includes the following steps:

Step S51: The V-GW initializes services.

Step S52: After the service initialization, the V-GW sends a charging request to the integrated V-OCS/Proxy-OCS (in FIG. 5, the V-GW sends a Credit Control Request, CCR, to the V-OCS/Proxy-OCS as an example). The charging request carries a service ID and a subscriber ID. An exemplary CCR from the V-GW to the V-OCS/Proxy-OCS is as follows:

```
    <CCR> ::= < Diameter Header: 272, REQ, PXY >
                      < Session-Id > = xxxx
                        { Origin-Host }
                        { Origin-Realm }
                        { Destination-Realm }
                        { Auth-Application-Id }
                        { Service-Context-Id }
                        { CC-Request-Type }
                        { CC-Request-Number }
                        [ Destination-Host ]
                        [ User-Name ]
                        [ Origin-State-Id ]
                        [ Event-Timestamp ]
                       * [ Subscription-Id ]
                        [ Termination-Cause ]
                        [ Requested-Action ]
                        [ Multiple-Services-Indicator ]
                       *[ Multiple-Services-Credit-Control ]
                                Requested-Service-Unit
                                [ User-Equipment-Info ]
                      * [ Proxy-Info ]
                      * [ Route-Record ]
                       [ Service-Information ]
                        *[AVP] /* extended AVP */
```

Step S53: Upon reception of the charging request, according to the subscriber and/or service information (the service ID and/or the subscriber ID) carried in the charging request and a charging control policy information preconfigured, the V-OCS/Proxy-OCS determines that the current service is a service requested by a roaming subscriber in the visited network and determines a charging policy which requires that the request be forwarded directly to the home network for rating, charge reservation and deduction. In this embodiment, before the charging request is sent, the H-OCS knows rating information of the service in the visited network in advance through interaction between charging systems or by other means; that is, the H-OCS already knows tariff information of the service in the visited network. In this case, the V-OCS/Proxy-OCS serves as a Diameter (a charging protocol) proxy and a relay node and the online charging message is forwarded to the H-OCS directly without the need to alter the Diameter message at the charging session layer.

Step S54: The V-OCS/Proxy-OCS forwards the charging request to the H-OCS (in FIG. 5, the V-OCS/Proxy-OCS forwards the CCR to the H-OCS). The charging request carries rating and credit control information generated in step S53 according to the determined policy and the service ID and subscriber ID. The rating and credit control information may be carried in a Request Service Unit (RSU). In practice, if the H-OCS does not know how to rate the service in the visited network in advance, the charging request may also carry service tariff information of the service in the visited network. An exemplary CCR sent by the V-OCS/Proxy-OCS to the H-OCS that carries service tariff information is as follows:

```
    <CCR> ::= < Diameter Header: 272, REQ, PXY >
                      < Session-Id > = xxxx
                        { Origin-Host }
                        { Origin-Realm }
                        { Destination-Realm }
                        { Auth-Application-Id} }
                        { Service-Context-Id }
                        { CC-Request-Type }
                        { CC-Request-Number }
                        [ Destination-Host ]
                        [ User-Name ]
                        [ Origin-State-Id ]
                        [ Event-Timestamp ]
                       * [ Subscription-Id ]
                        [ Termination-Cause ]
                        [ Requested-Action ]
                        [ Multiple-Services-Indicator ]
                       *[ Multiple-Services-Credit-Control ]
                                Requested-Service-Unit
                                [ User-Equipment-Info ]
                      * [ Proxy-Info ]
                      * [ Route-Record ]
                       [ Service-Information ]
                        * [ AVP ] /* extended AVP */
                       [Service-Tariff]
```

Step S55: The H-OCS searches for subscriber account information according to the received subscriber ID information, and processes online rating, online charge reservation and deduction according to the charging policy.

Step S56: The H-OCS responds to the V-OCS/Proxy-OCS with a charging result information. In FIG. 5, the response message is a Credit Control Answer (CCA).

Step S57: The V-OCS/Proxy-OCS sends the charging result information to the V-GW, which responds via a CCA in FIG. 5.

Step S58: The V-GW delivers the service.

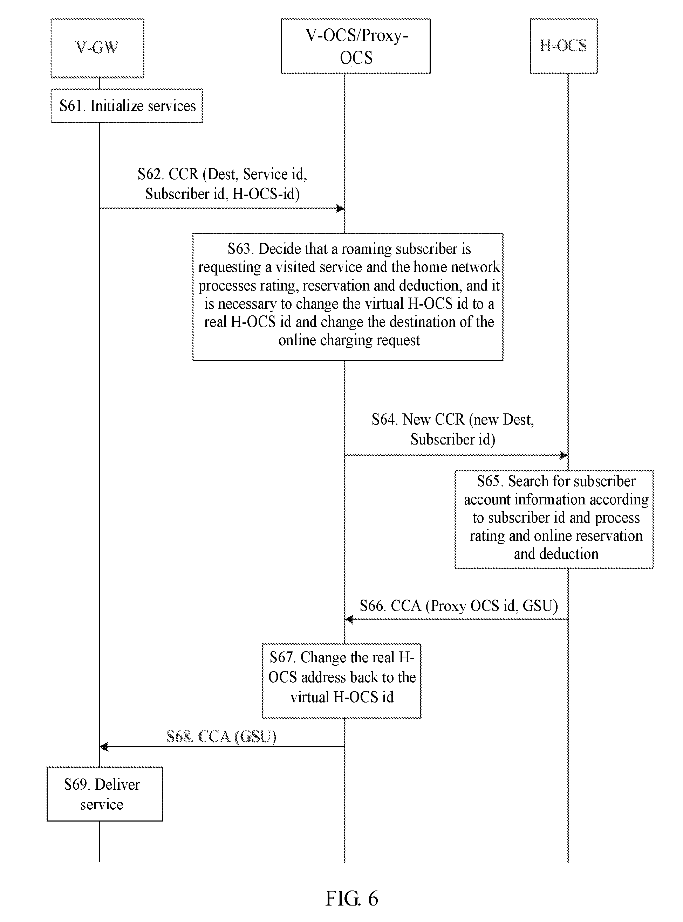

FIG. 6 is a schematic flow chart illustrating a method for online charging on roaming according to a second embodiment of the invention. In this embodiment, the H-OCS address or H-OCS gateway address is invisible to a visited network element. A virtual ID of the H-OCS address or H-OCS gateway address is sent to the V-GW via a Policy Control and Charging (PCC) process or by other means. The particular implementation may be that the visited network operator configures the virtual ID in advance or the virtual ID is sent to a V-PCRF together with charging rules of the H-PCRF in the PCC process. The procedure shown in FIG. 6 includes:

Step S61: The V-GW initializes services.

Step S62: After the service initialization, the V-GW sends a charging request to the integrated V-OCS/Proxy-OCS (in FIG. 6, the V-GW sends a CCR to the V-OCS/Proxy-OCS). The charging request carries a service ID, a subscriber ID, a destination address (Dest) and a virtual ID of the H-OCS (H-OCS-id). An exemplary CCR from the V-GW to the V-OCS/Proxy-OCS is as follows:

```
     <CCR> := < Diameter Header: 272, REQ, PXY >
                      < Session-Id > = xxxx
                        { Origin-Host = "V-GW address"
                        { Origin-Realm }
                        { Destination-Realm }
                        { Auth-Application-Id }
                        { Service-Context-Id }
                        { CC-Request-Type }
                        { CC-Request-Number }
                        [ Destination-Host ] = "Proxy-OCS address"
                        [ User-Name ]
                        [ Origin-State-Id ]
                        [ Event-Timestamp ]
                       * [ Subscription-Id ]
                        [ Termination-Cause ]
                        [ Requested-Action ]
                        [ Multiple-Services-Indicator ]
                       *[ Multiple-Services-Credit-Control ]
                                Requested-Service-Unit
                                [ User-Equipment-Info ]
                      * [ Proxy-Info ]
                      * [ Route-Record ]
                       [ Service-Information ]
                        *[AVP ] /* extended AVP */
```

Step S63: Upon reception of the charging request, according to the subscriber and/or service information (the service ID and subscriber ID) carried in the charging request and preset charging control policies, the V-OCS/Proxy-OCS determines that a roaming subscriber consumes a service in the visited network, and determines a charging policy which requires that rating, charge reservation and deduction be processed by the home network, and determines it need to change the virtual H-OCS ID to a real address of the H-OCS and modify the destination address of the online charging request. Here, the V-OCS/Proxy-OCS modifies the virtual ID to the real H-OCS address according to a map between virtual H-OCS IDs and real H-OCS addresses and changes the destination address of the charging session to the real H-OCS address.

Step S64: The V-OCS/Proxy-OCS initiates a new charging session request to the H-OCS (via a CCR in FIG. 6). The charging request carries the new destination address (new Dest) and the subscriber ID. Now the charging session between the V-GW and the V-OCS/Proxy-OCS is different from the charging session between the V-OCS/Proxy-OCS and the H-OCS. The V-OCS/Proxy-OCS maintains the linkage between the two charging sessions. In this case, the V-OCS/Proxy-OCS mainly completes conversion of the H-OCS virtual ID and the conversion of the origin address and destination address between the two charging sessions. An exemplary CCR from the V-OCS/Proxy-OCS to the H-OCS is as follows:

```
    <CCR> ::= < Diameter Header: 272, REQ, PXY >
                      < Session-Id > = yyyy(new)
                        { Origin-Host }= "Proxy-OCS address"
                        { Origin-Realm }
                        { Destination-Realm }
                        { Auth-Application-Id }
                        { Service-Context-Id }
                        { CC-Request-Type }
                        { CC-Request-Number }
                        [ Destination-Host ] = "H-OCS address"
                        [ User-Name ]
                        [ Origin-State-Id ]
                        [ Event-Timestamp ]
                       * [ Subscription-Id ]
                        [ Termination-Cause ]
                        [ Requested-Action ]
                        [ Multiple-Services-Indicator ]
                       *[ Multiple-Services-Credit-Control ]
                                Requested-Service-Unit
                                CC-Money
                                    Unit-Value
                                CC-Service-Specific-Units
                        [ User-Equipment-Info ]
                      * [ Proxy-Info ]
                      * [ Route-Record ]
                       [ Service-Information ]
                        * [ AVP ] /* extended AVP */
```

Step S65: The H-OCS searches for subscriber account information according to the received subscriber ID and processes online rating, online charge reservation and deduction according to the charging policy.

Step S66: The H-OCS responds to the V-OCS/Proxy-OCS with a charging result information, via a CCA in FIG. 6. The response message includes a V-OCS/Proxy-OCS ID.

Step S67: The V-OCS/Proxy-OCS modifies the real H-OCS address to the virtual H-OCS ID.

Step S68: The V-OCS/Proxy-OCS sends the charging result information to the V-GW, via a CCA in FIG. 6. The message carries the virtual H-OCS ID.

Step S69: The V-GW delivers the service.

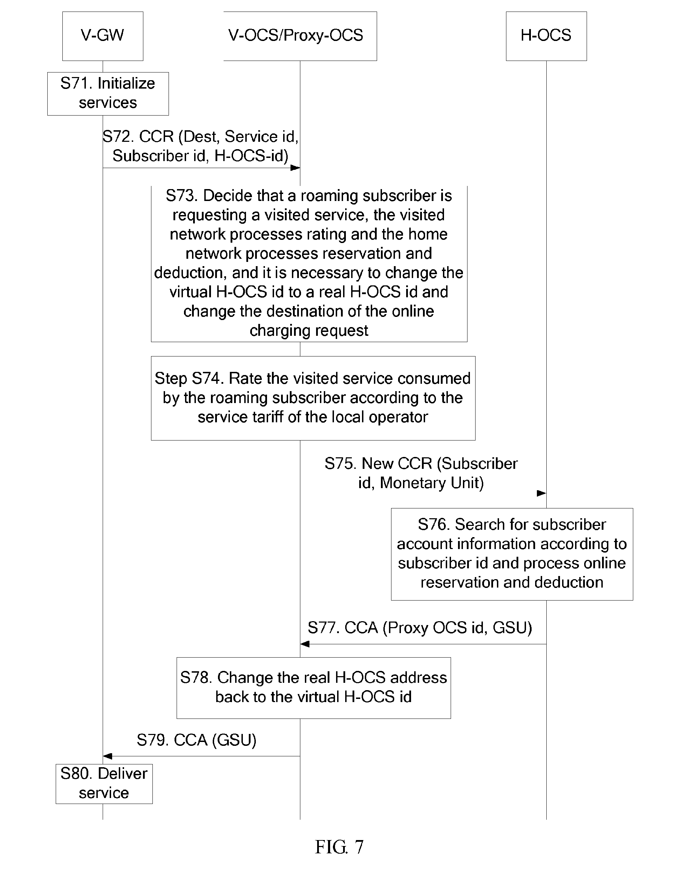

FIG. 7 is a schematic flow chart illustrating a method for online charging on roaming according to a third embodiment of the invention. The procedure according to this embodiment is different from the procedure shown in FIG. 6 in that the V-OCS rates roaming services and the H-OCS is an account balance manager that executes balance reservation and deduction actions. In this embodiment, the Gy' interface between the V-OCS/Proxy-OCS and the H-OCS may adopt a CCR that carries the monetary unit for charge reservation and deduction. If the home network includes a uniform account management center, the V-OCS/Proxy-OCS may alternatively adopt balance reservation and deduction commands to send a monetary unit request to the account management center. The procedure shown in FIG. 7 includes:

Step S71: The V-GW initializes services.

Step S72: After the service initialization, the V-GW sends a charging request to the integrated V-OCS/Proxy-OCS (in FIG. 7, the V-GW sends a CCR to the V-OCS/Proxy-OCS). The charging request carries a service ID, a subscriber ID, a destination address (Dest) and a virtual ID of the H-OCS (H-OCS-id). An exemplary CCR from the V-GW to the V-OCS/Proxy-OCS is as follows:

```
    <CCR> ::= < Diameter Header: 272, REQ, PXY >
                      < Session-Id > = xxxx
                        { Origin-Host }
                        { Origin-Realm }
                        { Destination-Realm }
                        { Auth-Application-Id }
                        { Service-Context-Id }
                        { CC-Request-Type }
                        { CC-Request-Number }
                        [ Destination-Host ]
                        [ User-Name ]
                        [ Origin-State-Id ]
                        [ Event-Timestamp ]
                       * [ Subscription-Id ]
                        [ Termination-Cause ]
                        [ Requested-Action ]
                        [ Multiple-Services-Indicator ]
                       *[ Multiple-Services-Credit-Control ]
                        Requested-S ervice-Unit
                                [ User-Equipment-Info ]
                      * [ Proxy-Info ]
                      * [ Route-Record ]
                      [ Service-Information ]
                        * [AVP ] /* extended AVP */
```

Step S73: Upon reception of the charging request, according to the subscriber and/or service information (the service ID and subscriber ID) carried in the charging request and preset charging control policies, the V-OCS/Proxy-OCS determines that a roaming subscriber consumes a service in the visited network, and determines a charging policy which requires that rating be processed by the visited network and charge reservation and deduction be processed by the home network, and determines it necessary to change the virtual H-OCS ID to a real address of the H-OCS and modify the destination address of the online charging request. Here, the V-OCS/Proxy-OCS modifies the virtual ID to the real H-OCS address according to a map between virtual H-OCS IDs and real H-OCS addresses and changes the destination address of the charging session to the real H-OCS address.

Step S74: The V-OCS/Proxy-OCS rates the service consumed by the roaming subscriber in the visited network according to the service tariff of the local operator.

Step S75: The V-OCS/Proxy-OCS initiates a new charging session request to the H-OCS. The request carries a monetary unit that is required by the H-OCS for reservation and deduction. An exemplary CCR from the V-OCS/Proxy-OCS to the H-OCS is as follows:

```
    <CCR> ::= < Diameter Header: 272, REQ, PXY >
                      < Session-Id > = yyyy
                        { Origin-Host }
                        { Origin-Realm }
                        { Destination-Realm }
                        { Auth-Application-Id }
                        { Service-Context-Id }
                        { CC-Request-Type }
                        { CC-Request-Number }
                        [ Destination-Host ]
                        [ User-Name ]
                        [ Origin-State-Id ]
                        [ Event-Timestamp ]
                       * [ Subscription-Id ]
                        [ Termination-Cause ]
                        [ Requested-Action ]
                        [ Multiple-Services-Indicator ]
                       *[ Multiple-Services-Credit-Control ]
                                Requested-Service-Unit
                                CC-Money
                                    Unit-Value
                                CC-Service-Specific-Units
                        [ User-Equipment-Info ]
                      * [ Proxy-Info ]
                      * [ Route-Record ]
                       [ Service-Information ]
                        *[ AVP ] /* extended AVP */
```

Step S76: The H-OCS searches for subscriber account information according to the received subscriber ID and processes online charge reservation and deduction according to the charging policy.

Step S77: The H-OCS responds to the V-OCS/Proxy-OCS with a charging result information, via a CCA in FIG. 7. The response message includes a V-OCS/Proxy-OCS ID.

Step S78: The V-OCS/Proxy-OCS modifies the real H-OCS address to the virtual H-OCS ID.

Step S79: The V-OCS/Proxy-OCS sends the charging result information to the V-GW, via a CCA in FIG. 7. The virtual H-OCS ID is used in the process.

Step S80: The V-GW delivers the service.

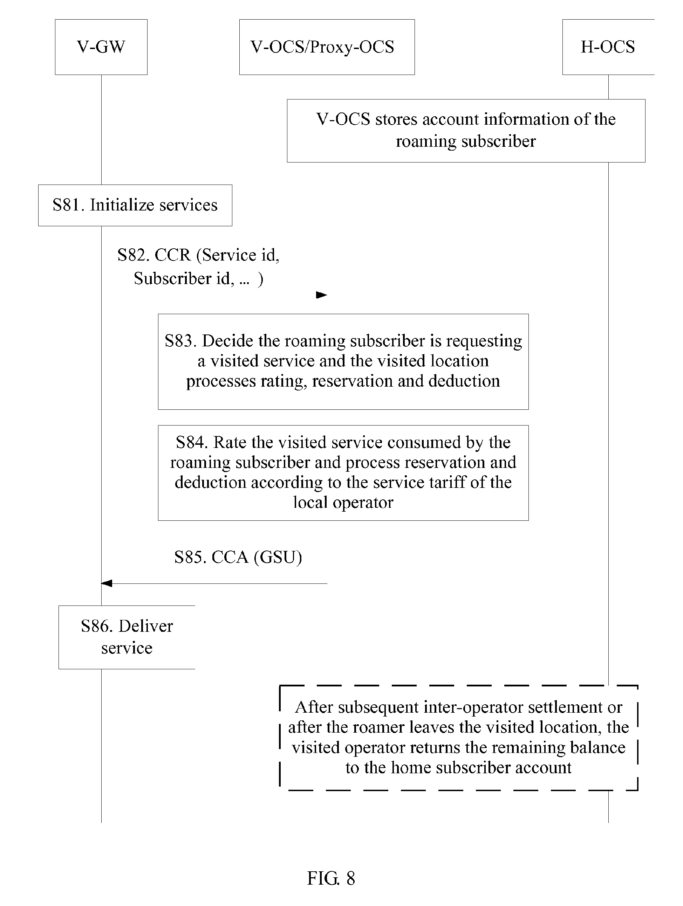

FIG. 8 is a schematic flow chart illustrating a method for online charging on roaming according to a fourth embodiment of the invention. In this embodiment, a temporary account is created for a roaming subscriber in the visited network through interaction between charging systems or by other means. In this case, it is unnecessary for the V-OCS/Proxy-OCS to forward an online charging request to the H-OCS; instead, online charging control is completed in the visited network. The procedure shown in FIG. 8 includes:

Step S81: The V-GW initializes services.

Step S82: After the service initialization, the V-GW sends a charging request to the integrated V-OCS/Proxy-OCS (in FIG. 8, the V-GW sends a CCR to the V-OCS/Proxy-OCS). The charging request carries a service ID and a subscriber ID.

Step S83: Upon reception of the charging request, according to the subscriber and/or service information carried in the charging request (the service ID and/or the subscriber ID) and a charging control policy information preset, the V-OCS/Proxy-OCS determines that the current service is a service consumed by a roaming subscriber in the visited network, and determines a charging policy which requires that rating, charge reservation and deduction be processed by the visited network.

Step S84: The V-OCS/Proxy-OCS processes rating, reservation and deduction for the service consumed by the roaming subscriber in the visited network according to the service tariff of the local operator.

Step S85: The V-OCS/Proxy-OCS sends the charging result to the V-GW, which is a CCA in FIG. 8.

Step S86: The V-GW delivers the service.

In the fourth method embodiment, after subsequent inter-operator settlement or after the roaming subscriber leaves the visited network, the visited network operator returns the remaining balance to the home subscriber account.

The foregoing roaming online charging procedures are all based on the assumption that the V-OCS and the Proxy-OCS are integrated. Roaming online charging procedures where the V-OCS and the Proxy-OCS are separate are described below.

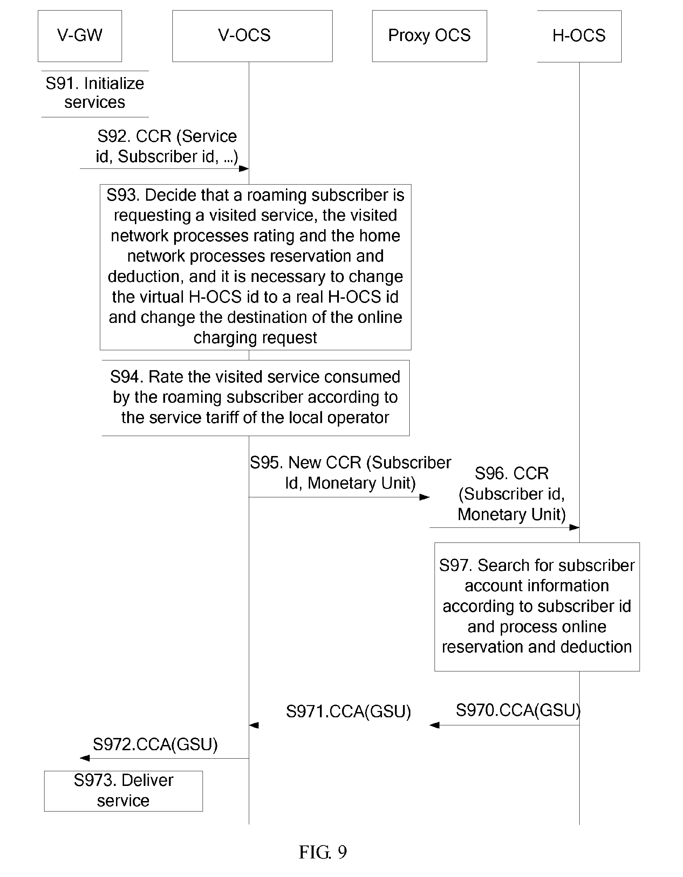

FIG. 9 is a schematic flow chart illustrating a method for online charging on roaming according to a fifth embodiment of the invention. The procedure shown in FIG. 9 includes:

Step S92: After completing the initialization in step S91, the V-GW initiates a charging request to the V-OCS.

Step S93: Upon reception of the charging request, according to the subscriber and/or service information carried in the charging request (the service ID and/or the subscriber ID) and preset charging control policies, the V-OCS determines that the current service is a service consumed by a roaming subscriber in the visited network, and determines a charging policy which requires that rating be processed by the visited network and charge reservation and deduction be processed by the home network, and determines it necessary to change the virtual H-OCS ID to the real H-OCS address and modify the destination address of the online charging request.

Step S94: The V-OCS rates the service consumed by the roaming subscriber in the visited network according to the service tariff of the local operator.

Step S95: The V-OCS initiates a new charging session request to the Proxy-OCS. The request carries a monetary unit and a charging policy.

Step S96: The Proxy-OCS forwards the charging request from the V-OCS to the H-OCS.

The subsequent steps are the same as those in a procedure where the V-OCS and the Proxy-OCS are integrated.

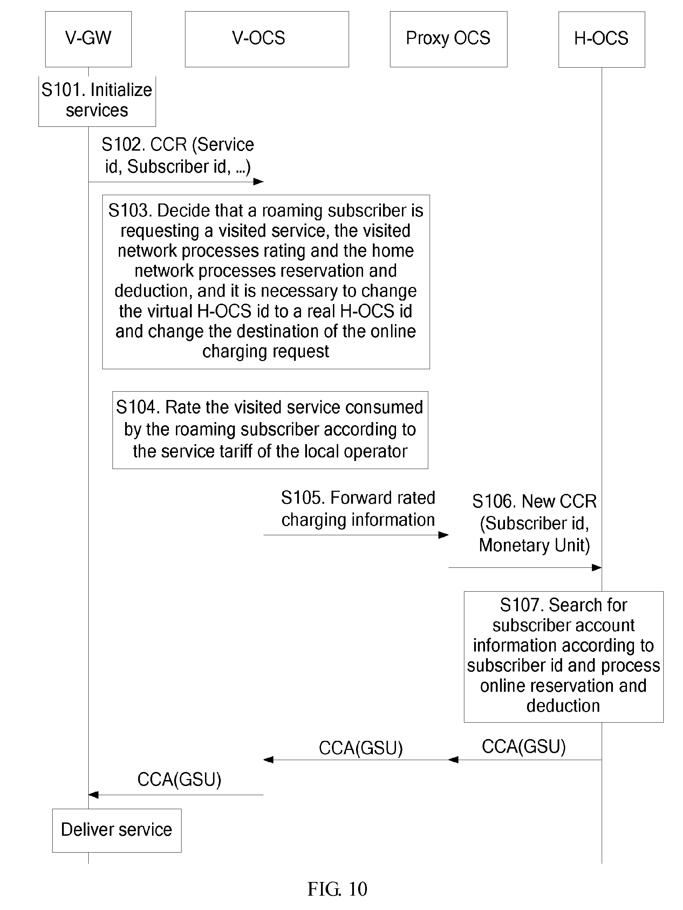

FIG. 10 is a schematic flow chart illustrating a method for online charging on roaming according to a sixth embodiment of the invention. As shown in FIG. 10, the procedure according to this embodiment is different from the procedure shown in FIG. 9 in the following steps:

Step S105: After the V-OCS rates the service consumed by the roaming subscriber in the visited network according to the service tariff policy of the local operator in step S104, the V-OCS forwards the rated charging information directly to the Proxy-OCS.

Step S106: The Proxy-OCS initiates a new charging session request to the H-OCS. The request carries a monetary unit and a charging policy.

The subsequent steps are the same as those in a procedure where the V-OCS and the Proxy-OCS are integrated.

Upon reception of a roaming online charging request from the V-GW, the OCS device in the embodiments of the invention determines the subsequent roaming charging policy according to the roaming online charging request combined with a charging control policy. Subsequent online charging may be processed locally and/or in the H-OCS according to the decision. This extends the online charging scheme for roaming subscribers. For example, the solution provided by the embodiments of the invention supports multiple online charging schemes on roaming, including: rating by the home network, reservation and deduction by the home network; rating by the visited network, reservation and deduction by the home network; or rating by the visited network, reservation and deduction by the visited network.

It is understandable to those skilled in the art that all or part of the steps of the foregoing embodiments can be implemented by hardware following instructions of programs. The programs may be stored in a computer readable storage medium. When the programs are executed, the steps of the foregoing embodiments are executed, and the storage medium may be any medium that can store program codes such as a Read-Only Memory/Random Access Memory (ROM/RAM), a magnetic disk and a compact disk.

Although the technical solution of the present invention has been described through exemplary embodiments, the invention is not limited to such embodiments. It is apparent that those skilled in the art can make various modifications and variations to the invention without departing from the scope of the invention. The invention is intended to cover the modifications and variations provided that they fall in the scope of protection defined by the claims or their equivalents.

## Claims

1. A method for online charging on roaming, comprising:
receiving a roaming online charging request from a visited gateway;
determining a subsequent roaming charging policy according to the roaming online charging request combined with a charging control policy; and
processing charging according to the determined roaming charging policy.

2. The method according to claim 1, wherein the determining the roaming charging policy comprises:
obtaining subscriber information and/or service information carried in the roaming online charging request; and
determining the charging policy according to the charging control policy and the obtained information, wherein the charging policy comprises policy information requires that rating and credit control be processed by a home online charging system when a roaming subscriber requests a service in a visited network; and
the charging process comprises:
sending a rating and credit control request to the home online charging system for charging.

3. The method according to claim 2, wherein the sending the rating and credit control request to the home online charging system for charging comprises:
sending the rating and credit control request to a proxy online charging system device; and
forwarding, by the proxy online charging system device, the rating and credit control request to the home online charging system for charging.

4. The method according to claim 2, wherein the rating and credit control request comprises tariff information of the service in the visited network.

5. The method according to claim 1, wherein the determining the roaming charging policy comprises:
obtaining subscriber information and/or service information carried in the roaming online charging request; and
determining the charging policy according to the charging control policy and the obtained information, wherein the charging control policy comprises policy information which requires that rating be processed by a visited network and credit control be processed by a home online charging system when a roaming subscriber requests a service in the visited network; and
the charging processing comprises:
processing rating; and
sending a credit control request to the home online charging system for charging.

6. The method according to claim 5, wherein the sending the credit control request to the home online charging system for charging comprises:
sending the credit control request to a proxy online charging system device; and
forwarding, by the proxy online charging system device, the credit control request to the home online charging system for charging.

7. The method according to claim 1, wherein the processing charging according to the determined roaming charging policy comprises:
replacing a virtual home online charging system address with a real home online charging system address;
sending a rating and credit control request to the home online charging system for charging; or
processing rating and sending a credit control request to the home online charging system for charging.

8. The method according to claim 7, wherein the replacing the virtual home online charging system address with the real home online charging system address comprises:
obtaining the real home online charging system address according to a map between a virtual ID which is the virtual home online charging system address and the real home online charging system address, and replacing the virtual home online charging system address with the real home online charging system address.

9. The method according to claim 1, wherein the processing charging according to the determined roaming charging policy comprises:
creating a session to the home online charging system; and
sending an online charging request to the home online charging system via the created session.

10. The method according to claim 1, wherein the processing charging according to the determined roaming charging policy comprises:
sending an online charging request to a proxy online charging system device according to the determined roaming charging policy;
creating, by the proxy online charging system device, a session to a home online charging system; and
sending, by the proxy online charging system device, an online charging request to the home online charging system via the created session.

11. The method according to claim 1, wherein determining the roaming charging policy comprises:
obtaining subscriber information and/or service information carried in the roaming online charging request; and
determining the charging policy according to the charging control policy and the obtained information, wherein the charging policy comprises policy information which requires that rating and credit control be processed by a visited network when a roaming subscriber requests a service in the visited network; and
the charging processing comprises: processing, by the visited network, rating and credit control.

12. The method according to any of claims 2-11, wherein the credit control comprises charge reservation and deduction information.

13. An online charging system device, comprising:
a receiving unit, adapted to receive a roaming online charging request sent by a visited gateway;
a determining unit, adapted to determine a roaming charging policy according to the roaming online charging request and a stored charging control policy; and
an online charging unit, adapted to process online charging according to the determined roaming charging policy.

14. The online charging system device according to claim 13, further comprising:
a proxy online charging system unit, adapted to send a charging request to a home online charging system for charging processing according to the determined roaming charging policy.

15. The online charging system device according to claim 13, wherein the determining unit comprises:
an obtaining subunit, adapted to obtain subscriber information and/or service information carried in the roaming online charging request received by the receiving unit;
a storing subunit, adapted to store charging control policies; and
a determining subunit, adapted to determine the roaming charging policy according to a charging control policy stored in the storing subunit and the information obtained by the obtaining subunit.

16. The online charging system device according to any of claims 13-15, wherein the charging control policies comprise at least one of the following policies:
when a roaming subscriber requests a service in a visited network, rating and credit control should be processed by a home online charging system;
when a roaming subscriber requests a service in a visited network, rating should be processed by a visited online charging system, and credit control should be processed by a home online charging system; and
when a roaming subscriber requests a service in a visited network, rating and credit control should be processed by a visited online charging system.

17. The online charging system device according to claim 13, further comprising:
a session setup unit, adapted to set up a session to a home online charging system.

18. An online charging control system, comprising an online charging system device and a proxy online charging system device, wherein:
the online charging system device comprises:
a receiving unit, adapted to receive a roaming online charging request sent by a visited gateway;
a determining unit, adapted to determine a subsequent roaming charging policy according to the roaming online charging request received by the receiving unit combined with a stored charging control policy; and
an online charging unit, adapted to process online charging according to a decision made by the determining unit; and
the proxy online charging system device comprises:
a routing and forwarding unit, adapted to send the corresponding roaming online charging request to a home online charging system for charging processing according to the decision made by the determining unit.
